# EUROPEAN PATENT SPECIFICATION

(11) **EP 1 450 603 B1**
(45) Date of publication and mention of the grant of the patent: **10.06.2009**
(21) Application number: 02799522.4
(22) Date of filing: 27.09.2002
(51) Int. Cl.: E01H 11/00, A01M 21/04, A01N 25/16

(54) **METHOD FOR WEED CONTROL WITH HOT FOAM**
VERFAHREN FÜR DIE HEISSSCHAUM-UNKRAUTBEKÄMPFUNG
PROCEDE POUR ELIMINER LES MAUVAISES HERBES AVEC DE LA MOUSSE CHAUDE

(30) Priority: 27.09.2001 NZ 51449701; 26.06.2002 NZ 51980502
(43) Date of publication of application: 01.09.2004
(73) Proprietor: WAIPUNA SYSTEMS LIMITED (MALTA), Valetta, Malta (MT)
(72) Inventor: TINDALL, Denis Walter, Auckland 1006 (NZ); REID, David Garth, Auckland 1706 (NZ); JAMES, Gibb William, Auckland 1706 (NZ)
(74) Representative: Thomas, Simon
(86) International application number: PCT/NZ2002/000194
(87) International publication number: WO 2003/026414

(56) References cited:
- WO-A-01/45505
- WO-A-02/07513
- AU-A- 7 733 775
- AU-B- 661 648
- GB-A- 2 273 430
- US-A- 5 213 263
- US-A- 5 575 111
- US-B1- 6 180 088

## Description

### TECHNICAL FIELD

The present invention relates generally to the thermal control of vegetation, particularly weeds, and more specifically to a method for the control of weeds using hot foam.

### BACKGROUND ART

Thermal methods have been proposed for weed control wherein a variety of heated materials are applied to the weeds, including hot water, steam, hot air, flame and hot foam. These methods overcome some of the disadvantages of herbicides, such as spray drift and soil/groundwater pollution. They also avoid the physical effort required for manual weed removal.

New Zealand patent no. 240568 describes the use of hot water applied under a shroud. Compared to herbicides, the method is fast-acting, effective over a range of vegetation and weather conditions, and being non-toxic its use is less restricted e.g. personal protective clothing or certification is not required for applicators. However, the long shroud (to provide a thermal screen for temporary insulation from ambient temperature and wind) restricts the use and speed of coverage of hot water systems.

An alternative is described in US Patent No. 5433758 wherein a spray of hot water is applied to the weed, followed by a cold foam blanket to provide the temporary thermal screen. This method, however, requires separate apparatus for the production and distribution of the hot water and foam. Also, some cooling results from the application of a cold foam blanket which reduces the effectiveness of this method.

US Patent No. 5575111 describes a method where heated compressed air is mixed with a stream of hot water and surfactant to form a hot foam for application to the weeds. In this method heated air is used to melt the plants waxy cuticular coating while the foam acts to provide the temporary thermal screen. The foam used is relatively dry, being from 80 to 95% hot air by volume. It has been found however, that this method is not particularly effective at killing weeds. It appears that several factors may influence the lack of effectiveness of this method. Although the high temperature air disrupts the cuticle, it has been found that weeds treated in this manner grow back more quickly than those treated with hot water systems. Relatively dry foams have a low heat capacity and have a reduced ability to penetrate below the outermost surface of the plant to produce deeper more long lasting damage, particularly to the harder surfaces such as the stems of the target plants. Due to the stiffness of relatively dry foams they are unable to flow to obtain good intimate contact with the plants, thereby protecting, for example, the underside of foliage from contact with the foam. The size of bubbles formed in the foam is also an important factor, as large bubbles also reduce the heat flux through the foliage and stems with which they are in contact.

WO 01/45505 A2 discloses a method for eliminating weeds. In the method, selected anionic surfactants, optionally combined with additional auxiliary agents and additives, are added to the hot foam.

It is an object of the present invention to provide a system of thermal weed control which overcomes the drawbacks of hot water methods while retaining its advantages, but which also addresses the foregoing problems of foam methods.

Further aspects and advantages of the present invention will become apparent from the ensuing description which is given by way of example only.

### DISCLOSURE OF INVENTION

According to the present invention there is provided a method of controlling vegetation, including the steps:
preparing a foam having a temperature of between 75°C and 100°C and consisting volumetrically of 60% to 75% aqueous solution of biodegradable foaming agent and 40% to 25% air, and
directing a stream of the foam against the surface to be treated.

Although the method is primarily intended for the control of vegetation, particularly weeds, this should not be seen as limiting as it is also applicable to soil, for example, and for killing or controlling fungus, bacteria, virus and insects etc.

Preferably the foam is prepared by heating the aqueous solution and mixing a stream of air with a stream of aqueous solution to produce the stream of foam which is discharged at low pressure.

The foam discharge pressure may range from 5 PSI to 15 PSI, but is preferably 10 PSI (0.7 bar).

Preferably the water and foaming agent are mixed in the correct proportions in a reservoir. Optionally, the foaming agent may be metered into a flow of water, before or after the flow is heated.

Preferably the aqueous solution is alkyl polygclycoside (APG) mixed with water at a dilution rate of approximately 0.4%. Optionally other biodegradable foaming agents may be employed.

Preferably the solution is pumped through a boiler into a mixing device, where it is mixed with the air to produce foam which then passes through an elongate delivery passage before being discharged through a divergent shroud.

The solution delivery rate for commercial applications may be from 10 litres per minute to 500 litres/minute, or more. In the preferred embodiment, the foamable solution is supplied at a rate of approximately 10 litres per minute and at a pressure in the range of 5-15 PSI and most preferably 10 PSI.

The method produces a wet foam which consists volumetrically of 60% to 75% aqueous solution. Generally, this volumetric ratio should not normally exceed 85% with 60% being about optimum. Optionally, the stream of low pressure air may be heated prior to mixing with the solution.

According to another aspect of the present invention there is preferably provided a method of controlling vegetation, including the steps:
a) providing a flow of hot aqueous solution of biodegradable foaming agent;
b) passing at least part of said flow through a channel to facilitate low pressure that creates a venturi to draw in a stream of ambient air;
c) mixing the stream of air with the flow of hot aqueous solution to produce a stream of foam having a temperature of between 75°C and 10.0°C and consisting volumetrically of 60% to 75% aqueous solution of biodegradable foaming agent and 40% to 25% air, and
d) discharging the stream of foam against the surface to be treated.

Optionally, two or more channels may be provided, each drawing in a respective stream of ambient air to foam the solution. Preferably each channel provides a free jet of solution.

Preferably the solution is pumped through a boiler, the full stream flowing through one channel to facilitate low pressure that creates a venturi to draw in the stream of ambient air into a mixing chamber, where it is mixed with the solution to produce foam that then passes through an elongate delivery passage before being discharged through a divergent shroud.

An apparatus for performing the method of controlling vegetation according to the invention substantially as described above may include:
means for supplying a stream of hot aqueous solution;
means for supplying a stream of air;
a mixing chamber where the streams of air and solution are mixed to form foam, and
an elongate delivery passage connected between the mixing chamber and a divergent outlet shroud.

Preferably the solution is directed through a conduit to enter the mixing chamber in a jet-like flow substantially perpendicular to the air flow.

Preferably a foam control mesh is provided in the foam flow path. The mesh may be positioned in the shroud, near the outlet thereof. The mesh preferably has generally 4.76 mm holes at 6.35 mm triangular pitch, 51 % open area.

Preferably the internal cross-sectional area of the delivery passage is approximately 60% greater than that of the air delivery conduit and approximately ten times that of the solution delivery conduit.

Preferably the foam is applied from a mobile means, most preferably a self-propelled vehicle e.g. a truck or tractor.

In the apparatus for performing the method of controlling vegetation substantially as described above, the means for supplying a stream of air includes channel means which facilitate low pressure that creates a venturi to draw in a stream of ambient air.

In an embodiment for controlling vegetation by the application of hot foam through a hand lance, the venturi created by flow through the channel is preferably mounted on the hand lance.

Preferably the apparatus includes a hand-operated valve for controlling the flow of air into the mixing chamber.

As well as reducing equipment cost and energy usage, it has been found that using a venturi as described reduces the drop in temperature between the solution and the foam, producing a higher temperature foam for more effective treatment, whether using a hand lance, a vehicle mounted system or otherwise. It is possible when using a hand lance to considerably increase the length of hose that can be employed, thus providing the operator with additional versatility.

This apparatus and method is particularly useful to enable better application of heat in places where application is difficult, for example dense swards and vegetation substantially above 200mm in height. The application is less confined by surface conditions and obstacles since the foam adheres to vertical surfaces and does not run off like liquids. The residence time of hot foam on target areas is greater than that of hot water. The evaporation rate of wet foams is less, resulting in longer contact with the target. Also, foams provide visual evidence of coverage of the application area. Faster and more long-lasting control of weeds is provided, compared to the known hot air foam method.

With the application of hot foam instead of pure hot water a thermal screen is superfluous because the foam performs this function. Unlike pure hot water the hot foam can be blown over a certain distance without considerable heat loss.

Compared with other thermal methods it is distinguished by considerably higher working speed and lower costs. An area may be covered more quickly with lower water consumption and energy input per square meter than is possible with hot water systems.

Besides weed control in horticulture and agriculture, other application areas include the control of vegetation around trees, at the edge of concrete or paving, on roadside berms, around buildings and other obstructions, along railway lines, and other areas where the overgrowth of vegetation and in particular weeds is to be controlled.

### BRIEF DESCRIPTION OF DRAWINGS

Further aspects of the present invention will become apparent from the following description which is given by way of example only and with reference to the accompanying drawings in which:
Figure 1 is a schematic view of preferred embodiment of a handheld delivery system for performing a method of the present invention;
Figure 2 is a side elevation of the hand lance of Figure 1;
Figures 3a and 3b are plan and side elevations respectively of the shroud of the hand lance of Figure 1;
Figure 4 is a first alternative boom mounted system for performing a method of the present invention, and
Figure 5 is a second alternative boom mounted system for performing the method of the present invention;
Figure 6 is a side elevation of the hand lance of a delivery system for performing a method of the present invention;
Figure 7 is a section of the hand lance of Figure 6, and
Figures 8a and 8b are plan and side elevations respectively of the liquid jet of the hand lance of Figure 7.

### BEST MODES FOR CARRYING OUT THE INVENTION

As illustrated in the drawings, the apparatus is mounted to a vehicle (not shown), preferably a truck and includes an aqueous foamable solution supply tank 1, a boiler 2 for heating the solution from the tank 1 and a blower 3 for supplying air to foam the solution. The boiler 2 is positioned adjacent to the tank 1, and solution is supplied to the boiler 2 by a pump 4 powered by electricity from a generator 5. In one presently preferred embodiment, the boiler 2 has a burner (not shown) which bums liquid fuel, and the pump 4 is a single-stage centrifugal pump. Alternatively, the pump may be driven directly by a small petrol engine.

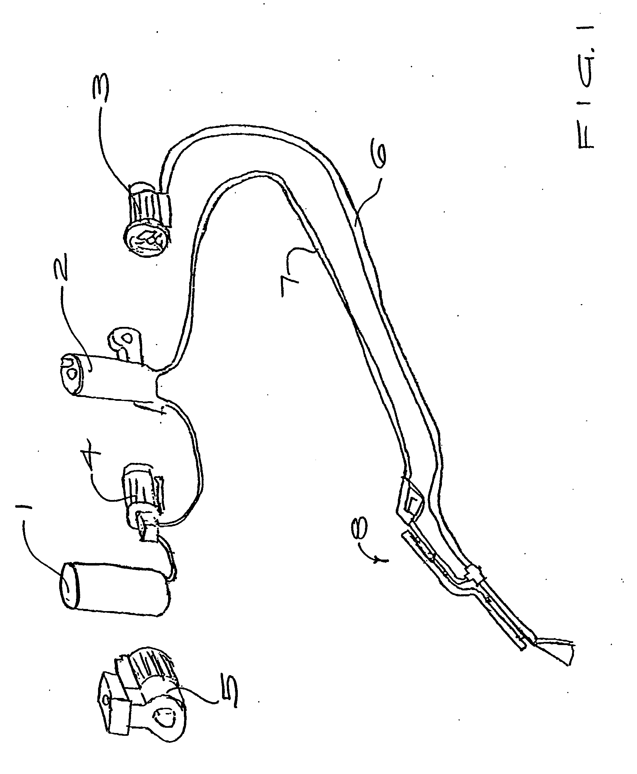

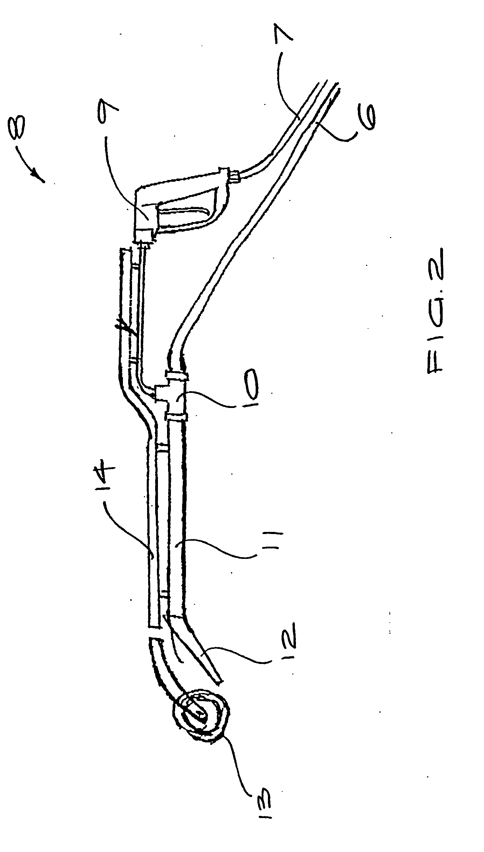

Referring to Figs. 1 and 2, a hand delivery system is illustrated wherein air from the blower 3 and hot solution from the boiler 2 are supplied by hoses 6 and 7 respectively to a hand lance 8 at the distal end thereof. The lance 8 has a trigger-operated valve 9 to control the flow of the hot solution to a mixing and expansion chamber 10 where it is introduced into the air stream to produce foam which then passes into an elongate delivery tube 11, before being discharged from a divergent shroud 12 for directing the pressurized foam against the surface to be treated. Optionally, a wheel 13 may be fitted to by means of a bracket 14 to support the lance 8.

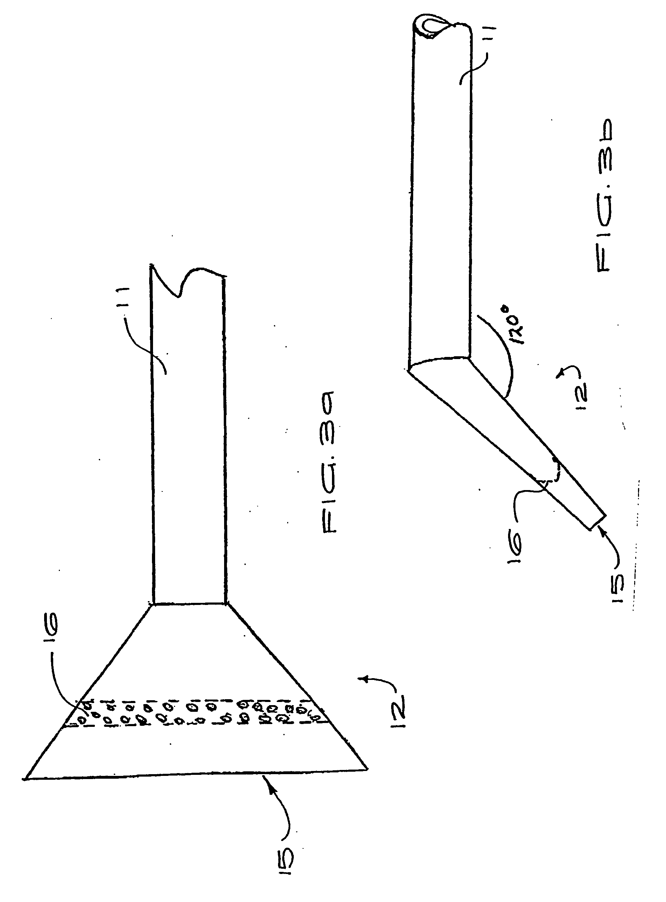

Figures 3a and 3b illustrate in more detail the shroud 12, which diverges from a circular section at the delivery tube end to a generally rectangular outlet 15, having an included angle of approximately 60 degrees. Located in a medial section of the shroud 12, a foam control mesh 16 is provided which is arranged approximately perpendicular to the flow. The mesh 16 is preferably bent into a 90° V about an axis perpendicular to the flow direction.

Foam producing apparatus as known heretofore, are primarily intending to efficiently produce foam having a relatively low moisture content for applications such as fire fighting, herbicide application or for insulating purposes (e.g. US Pat. No. 5575111). For high efficiency in these applications it is important to have a high expansion ratio - that is to produce a high volume of foam in relation to the quantity of liquid solution and compressed gas employed.

The system of the present invention, however, results in a relatively low expansion ratio producing wet foam with reduced cooling and a foam temperature of approximately 92 °C or higher in the preferred embodiment.

While the apparatus shown is illustrative of the requirements for performing the method of the present invention, it will be appreciated that many variations of the apparatus may be employed to perform the method. For example, if desired, instead of being mixed with water in the tank 1, the foaming agent can be introduced into hot water at the output of the boiler. The foaming agent may stored in a separate tank (not shown) and introduced into the hot water stream from the outlet of the boiler, with a flow control valve (not shown) for controlling the amount of agent which is introduced, alternatively a metering pump (not shown) may supply the foaming agent.

To utilize the apparatus above described for the purpose intended, the foamable solution preferably comprises alkyl polyglycoside (APG) mixed at a 0.4% dilution rate with water. APG is able to withstand temperatures in excess of 100°C without adverse effects and produces a foam which is stable for between 5 to 20 minutes under most ambient conditions. Moreover, the foam produced breaks down without drifting off the target plant and APG is a naturally occurring product which biodegrades both aerobically and anaerobically.

The output of the boiler 2 consists of pressurised solution at a temperature of close to 100°C. Actuation of the trigger 9 directs the solution into the stream of air from the blower 3. As the air mixes with the liquid solution it creates bubbles forming foam which builds up and is forced from the chamber 10 toward the outlet by the air pressure. Air is supplied at a rate of approximately 0.7m³ per minute, with solution supplied at approximately 10 litres per minute-the apparatus producing a foam which is approximately 60% solution by volume and at a temperature of 92°C, or more.

Factors which have been found to affect the correct foam production include the dimensions of the shroud12 and the delivery tube 11. A 32mm internal diameter delivery tube of approximately 400mm length diverging to a shroud opening of approximately 200mm x 15mm has been found to give good results. The internal cross-sectional area of the delivery tube is approximately ten times that of the tube supplying the solution.

It is thought that the relative lack of foam flow constriction resulting from this arrangement is important in producing the foam, which is pressurised only to approximately 10 PSI (0.7 bar). Higher pressures and air flows have been found to disperse the foam from the target and result in excessive cooling. The mesh 16 provided in the shroud 12 controls bubble size and foam formation and a mesh 16 having generally 4.76 mm holes at 6.35 mm triangular pitch, and 51 % open area has been found satisfactory.

The cross-sectional area of the chamber 10 is approximately 60% larger than that of the air hose 6. This, accordingly, does not permit a large expansion and a volume of wet, high density foam is continuously produced in response to the continuous agitation of the foamable solution by the air flow.

In preferred embodiments the generator 5, tank 1, pump 4, boiler 2 and blower 3 are sized to provide foamable solution and air to two lances 8, which are operable separately or together.

The system is capable of treating a nominal 1000m2 per hour, at an approximate treatment width of 200mm to 300mm from each lance.

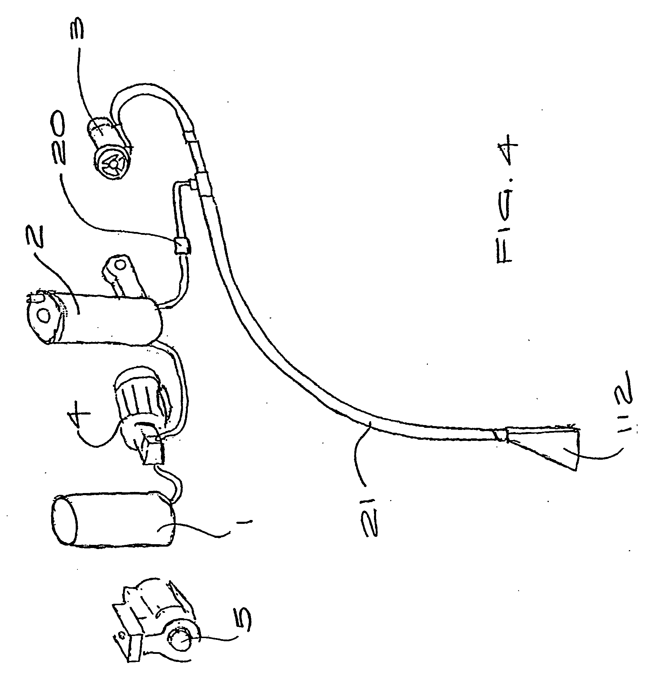

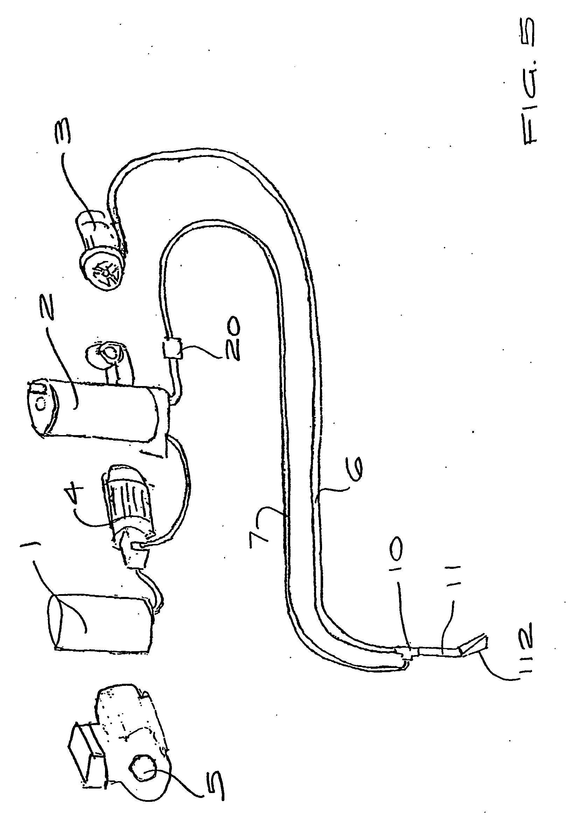

Figs. 4 and 5 illustrate schematically systems for higher application rates, where for example, the outlet shroud 112 is mounted on a boom (not shown) fixed to a vehicle. Like numbering is used to refer to the elements common with the system of Fig. 1. Instead of a manually actuated trigger valve, a remotely actuable valve 20 (e.g. a solenoid valve) operated by the vehicle's driver controls the supply of the foamable solution. The foam may be generated either adjacent to the boiler outlet with a large diameter delivery hose 21 supplying it to the shroud 21 (as per Fig. 4) or the foam may be generated adjacent to the shroud 112, requiring elongation of the separate air and solution lines (as per Fig. 5).

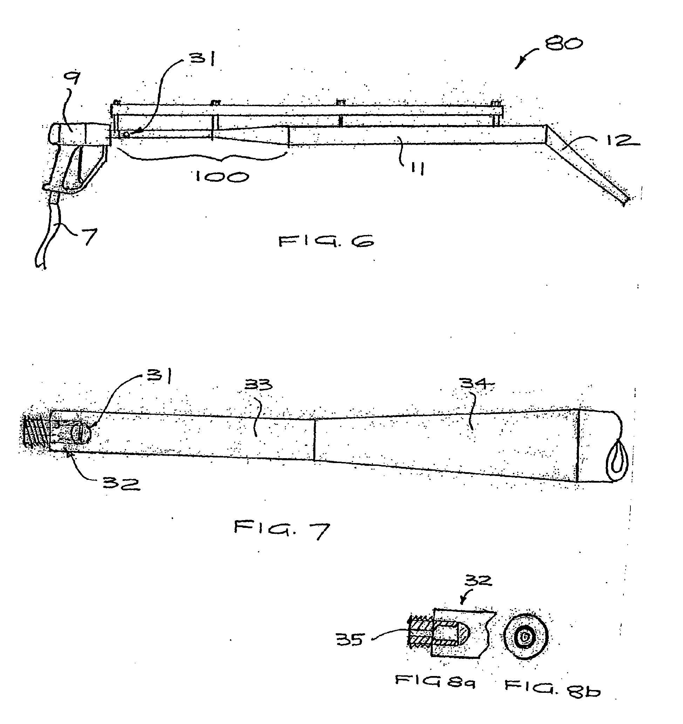

As used in Figs. 6, 7, 8a and 8b, like numbers refer to components common with the lance described with reference to Figs. 2 and 3. Flowrates, pressures, temperatures etc are also as per the description of the preferred embodiment of the invention described with reference to Figs. 2 and 3.

As illustrated in Fig. 7, a hand lance 80 for performing the method of the present invention is connected to a supply of hot aqueous solution of biodegradable foaming agent through supply hose 7. The lance 80 has a trigger-operated valve 9 to control the flow of the hot solution to a mixing and expansion chamber 100 into which ambient air is introduced through opposing openings 31 to produce foam which then passes into an elongate delivery tube 11, before being discharged from a divergent shroud 12 for directing the pressurized foam against the surface to be treated.

Figs. 7, 8a and 8b illustrate the construction of the chamber 100 in more detail. The chamber 100 comprises a tubular section 33 joined to a conical section 34 tapered out to the larger diameter of the delivery tube 11. An opening at the end of the tubular section 33 receives a nozzle 32 having a central outlet 35 which produces a single jet of solution directed longitudinally through the chamber 100.

As will be understood the flow through the nozzle 32 facilitates low pressure that creates a venturi to draw in a stream of ambient air through the openings 31. This system results in a relatively low expansion ratio producing wet foam with reduced cooling and a foam temperature of approximately 92 °C or higher in the preferred embodiment.

With the operating parameters described in application no. 514497, satisfactory results have been obtained employing a jet having a 4.5 mm diameter directing flow into a tubular section 33 having a 19 mm bore, with both the tubular section 33 and conical section 34 having substantially the same lengths. The apparatus produces a regular foam structure and more even temperature spread across the shroud 12.

It will be appreciated however, that this method of introducing the air for foaming the solution can be employed in a number of different applications, and is also not limited to applications employing a hand lance.

In an alternative embodiment (not shown) a sliding cover is provided for engagement with the tubular section 33 to form a valve that may be controlled for regulating the flow of air through the openings 31. This valve may be closed allowing the lance to be used for purposes other than foam production e.g. spraying. Varying the opening of the valve allows the composition and texture of the foam to be adjusted, as may be preferable for treating different types of vegetation, for example.

On the hand lance, the valve may be directly controlled by the operator. The valve also provides a method of protecting the operator. It can be closed when a sensor measures a temperature in excess of 100°C to prevent the escape of steam which (because of the position of the air inlet on the lance) may blow back on the operator.

To achieve higher foam production rates, satisfactory results have been obtained by maintaining the ratio (1:70) between the solution and flow rates air e.g. 40 litres per minute solution flow rate requires 2.8 m³ per minute of air supply.

In preferred embodiments for large scale commercial applications, it is anticipated that spray booms of up to 10 metres in width could be used, with proportionate increases in the flow rates to provide the specified foam temperature and composition.

Trials have been conducted to examine the effect of a number of variables associated with the present apparatus and method of producing hot foam. These trials determined the following important features.
- Foam texture and temperature are critical for the best results. The texture or viscosity level, which is influenced by the wetness and degree of aeration, is very important. A cold foamable solution mixed in a tank and then delivered into the heating chamber produced the most accurately repeatable performance. It is possible that when using an injection or venturi delivery system for introducing the foaming agent, accuracy of mix became variable due to foam agent building up in delivery lines and residues remaining in the delivery chamber. A temperature range of 90° - 95° C was found to be ideal.
- Low pressure, high volume air delivered to a mixing chamber just prior to delivery of the hot solution produced the best results. Although compressed air may be used, the disadvantages include the higher cost of the compressor and increased cooling of the foam as the air expands.
- Providing negligible outlet pressure was also found to be important and a restrictive nozzle at the outlet should be avoided.
- Aerating the hot foamable solution at the treatment lance, such that the foam flows through only a short delivery passage was found to provide the best, most consistent and economic results.

Aspects of the present invention have been described by way of example only and it should be appreciated that modifications and additions may be made thereto without departing from the scope thereof as defined in the appended claims.

## Claims

1. A method of controlling vegetation, including the steps:
preparing a foam having a temperature of between 75°C and 100°C and consisting volumetrically of 60% to 75% aqueous solution of biodegradable foaming agent and 40% to 25% air, and
directing a stream of the foam against the surface to be treated.

2. A method of controlling vegetation as claimed in claim 1 wherein the foam is prepared by heating the aqueous solution and mixing a stream of air with a stream of aqueous solution to produce the stream of foam which is discharged at low pressure.

3. A method of controlling vegetation as claimed in claim 1 or claim 2 wherein the aqueous solution is alkyl polyglycoside mixed with water at a dilution rate of approximately 0.4%.

4. A method of controlling vegetation as claimed in any one of claims 1 to 3, wherein the foam is produced by:
(a) providing a flow of hot aqueous solution of biodegradable foaming agent;
(b) passing at least part of said flow through a channel to facilitate low pressure that creates a venturi to draw in a stream of ambient air;
(c) mixing the stream of air with the flow of hot aqueous solution to produce the stream of foam.

5. A method of controlling vegetation as claimed in claim 4 wherein the channel produces a free jet of solution.

6. A method of controlling vegetation as claimed in any one of claims 1 to 5, wherein the solution is pumped through a boiler (2), the full stream of solution flowing through one channel to facilitate low pressure that creates a venturi to draw in the stream of ambient air into a mixing chamber (10), where it is mixed with the solution to produce foam that then passes through an elongate delivery passage (11) before being discharged through a divergent shroud (12).

## Patentansprüche

1. Verfahren zur Vegetationskontrolle, das die folgenden Schritte beinhaltet:
Herstellen eines Schaums, der eine Temperatur zwischen 75 °C und 100 °C aufweist und volumetrisch aus 60 % bis 75 % wässriger Lösung eines biologisch abbaubaren Schaumbildners und 40 % bis 25 % % Luft besteht, und
Richten eines Stroms des Schaums gegen die zu behandelnde Oberfläche.

2. Verfahren zur Vegetationskontrolle nach Anspruch 1, wobei der Schaum hergestellt wird, indem die wässrige Lösung erhitzt wird und ein Luftstrom mit einem Strom der wässrigen Lösung gemischt wird, um den Schaumstrom zu erzeugen, der mit niedrigem Druck ausgestoßen wird.

3. Verfahren zur Vegetationskontrolle nach Anspruch 1 oder 2, wobei die wässrige Lösung Alkylpolyglykosid ist, das mit Wasser in einer Verdünnungsrate von ungefähr 0,4 % gemischt wurde.

4. Verfahren zur Vegetationskontrolle nach einem der Ansprüche 1 bis 3, wobei der Schaum erzeugt wird durch:
(a) Bereitstellen eines Flusses heißer wässriger Lösung eines biologisch abbaubaren Schaumbildners;
(b) Leiten mindestens eines Teils des Flusses durch einen Kanal, um einen niedrigen Druck zu ermöglichen, der einen Lufttrichter erzeugt, um einen Umgebungsluftstrom anzusaugen;
(c) Mischen des Luftstroms mit dem Fluss heißer wässriger Lösung, um den Schaumstrom zu erzeugen.

5. Verfahren zur Vegetationskontrolle nach Anspruch 4, wobei der Kanal einen freien Lösungsstrahl erzeugt.

6. Verfahren zur Vegetationskontrolle nach einem der Ansprüche 1 bis 5, wobei die Lösung durch einen Kessel (2) gepumpt wird, wobei der gesamte Lösungsstrom durch einen Kanal fließt, um einen niedrigen Druck zu ermöglichen, der einen Lufttrichter erzeugt, um einen Umgebungsluftstrom in eine Mischkammer (10) zu saugen, wo er mit der Lösung gemischt wird, um Schaum zu erzeugen, der dann einen länglichen Abgabedurchfluss (11) passiert, bevor er durch ein abweichendes Leitblech (12) ausgestoßen wird.

## Revendications

1. Procédé de limitation de la végétation, comprenant les étapes consistant à :
préparer une mousse ayant une température comprise entre 75 °C et 100 °C et constituée en volume de 60 % à 75 % % de solution aqueuse d'agent moussant biodégradable et de 40 % à 25 % d'air et
diriger un courant de la mousse contre la surface à traiter.

2. Procédé de limitation de la végétation selon la revendication 1 dans lequel la mousse est préparée par chauffage de la solution aqueuse et mélange d'un courant d'air avec un courant de solution aqueuse pour produire le courant de mousse qui est déchargé à basse pression.

3. Procédé de limitation de la végétation selon la revendication 1 ou la revendication 2 dans lequel la solution aqueuse est un alkylpolyglycoside mélangé avec de l'eau à un taux de dilution d'environ 0,4 %.

4. Procédé de limitation de la végétation selon l'une quelconque des revendications 1 à 3, dans lequel la mousse est produite par les opérations consistant à :
(a) fournir un flux de solution aqueuse chaude d'agent moussant biodégradable ;
(b) faire passer au moins une partie dudit flux dans un canal pour faciliter une basse pression qui crée un venturi pour faire entrer un courant d'air ambiant ;
(c) mélanger le courant d'air avec le flux de solution aqueuse chaude pour produire le courant de mousse.

5. Procédé de limitation de la végétation selon la revendication 4 dans lequel le canal produit un jet libre de solution.

6. Procédé de limitation de la végétation selon l'une quelconque des revendications 1 à 5, dans lequel la solution est pompée en passant par une chaudière (2), le courant total de solution s'écoulant dans un canal pour faciliter une basse pression qui crée un venturi pour faire entrer le courant d'air ambiant dans une chambre de mélange (10), où il est mélangé avec la solution pour produire de la mousse qui passe ensuite dans un passage de distribution allongé (11) avant d'être déchargée par un déflecteur divergent (12).
